# FASCICULE DE BREVET EUROPEEN

(11) **EP 1 460 601 B1**
(45) Date de publication et mention de la délivrance du brevet: **14.11.2007**
(21) Numéro de dépôt: 04290630.5
(22) Date de dépôt: 08.03.2004
(51) Int. Cl.: G08G 1/0962, G08G 1/0967, G01C 21/36

(54) **Système d'aide à la conduite embarqué dans un véhicule automobile**
Fahrerassistenzsystem für Kraftfahrzeuge
Driver Assistance System for Motor Vehicles

(30) Priorité: 18.03.2003 FR 0303293
(43) Date de publication de la demande: 22.09.2004
(73) Titulaire: VALEO VISION, 93012 Bobigny Cédex (FR)
(72) Inventeur: Mensales, Alexandre, 95360 Montmagny (FR)
(74) Mandataire: Renous Chan, Véronique

(56) Documents cités:
- EP-A- 0 406 946
- WO-A-01/75838
- WO-A-03/017226
- DE-A- 19 609 488
- DE-A- 19 940 723
- FR-A- 2 755 228
- US-B1- 6 281 806
- US-B1- 6 472 977
- ULMER B: "VITA-an autonomous road vehicle (ARV) for collision avoidance in traffic" INTELLIGENT VEHICLES '92 SYMPOSIUM., PROCEEDINGS OF THE DETROIT, MI, USA 29 JUNE-1 JULY 1992, NEW YORK, NY, USA,IEEE, US, 29 juin 1992 (1992-06-29), pages 36-41, XP002180382 ISBN: 0-7803-0747-X
- ULMER B: "VITA II-active collision avoidance in real traffic" PROCEEDINGS OF THE INTELLIGENT VEHICLES SYMPOSIUM, XX, XX, 24 octobre 1994 (1994-10-24), pages 1-6, XP002180383

## Description

La présente invention a pour objet un système d'aide à la conduite embarqué dans un véhicule automobile. L'invention a essentiellement pour but de proposer une solution dans laquelle on complète une information visuelle, relative à une route empruntée à un instant donné et qui est restituée sur un écran dit écran de contrôle, par un ensemble d'informations complémentaires susceptibles d'intéresser le conducteur, notamment pour l'assister dans ses déplacements.

Le domaine de l'invention est, d'une façon générale, celui des systèmes d'assistance d'un conducteur lors de déplacements au moyen de son véhicule, et plus particulièrement le domaine de l'aide à la conduite au moyen d'un outil de type écran de contrôle.

Dans ce domaine, on connaît notamment l'utilisation du système GPS (Global Positionning System en anglais pour système de positionnement par satellite) qui permet de déterminer avec une précision de l'ordre de 5 mètres la position d'un véhicule.

Le système GPS, associé à une base de données de cartographie, permet d'élaborer, au sein du véhicule, un système de navigation particulièrement précis qui permet de connaître à l'avance la géométrie d'une route empruntée. A cet effet, un ensemble de capteurs fournissent à un calculateur des informations relatives par exemple à des mouvements du volant ou à la vitesse du véhicule ; ces informations sont combinées avec les informations de position reçues au moyen du système GPS pour fournir au conducteur des renseignements très précis quand à la trajectoire qu'il doit suivre pour se rendre à un endroit qu'il a préalablement indiqué.

On peut ainsi obtenir, sur un écran de contrôle, une trajectoire globale à suivre entre un point de départ et/ou intermédiaire du parcours et un point d'arrivée et/ou intermédiaire de ce parcours. On peut également obtenir, sur l'écran de contrôle, une représentation graphique très détaillée d'une route empruntée à un instant donné, avec des informations supplémentaires indiquant précisément les virages ou les changements de direction à observer. Ces informations supplémentaires peuvent être vocales et/ou graphiques : des flèches de direction peuvent être disposée sur la représentation graphique de la route empruntée pour symboliser la direction à suivre.

Dans l'état de la technique, on connaît également les systèmes d'aide à la vision de nuit. De tels systèmes prévoient d'équiper le véhicule d'une caméra vidéo qui permet de fournir une image vidéo de l'environnement dans lequel le véhicule évolue, et plus particulièrement de la route. La caméra, dans le cadre de la vision de nuit, est une caméra infra-rouge qui permet d'obtenir une image de la route éclairée au moyen de rayons lumineux infra-rouge. Le conducteur dispose ainsi sur un écran de contrôle d'une image de la route telle qu'il la verrait en pleine journée. De préférence, l'écran de contrôle est disposé sur une partie supérieure du tableau de bord, de telle sorte que la consultation de l'écran de contrôle ne nécessite pas un mouvement trop important de la tête du conducteur par rapport à sa position de conduite.

La demande de brevet WO 03/017226A2 décrit ainsi, dans un système de navigation pour véhicule automobile adapté à la vision de nuit, un procédé et un dispositif pour afficher des instructions d'aide à la conduite. La solution proposée dans ce document apporte une meilleure cohérence entre l'image vidéo de l'environnement routier présentée au conducteur et des instructions calculées d'aide à la conduite qui peuvent être superposées sur l'image vidéo. Des inclinaisons du véhicule selon l'axe longitudinal et l'axe latéral par rapport à la surface de la route ainsi que l'inclinaison de la route et des données tridimensionnelles du terrain sont prises en compte lors de la production des instructions d'aide à la conduite.

Dans un domaine voisin de l'aide à la conduite, on a par ailleurs la possibilité d'équiper le véhicule d'un dispositif de réception, et éventuellement d'émission, capable de communiquer sur un réseau de télécommunication distant, par exemple un réseau de radiotéléphonie cellulaire. Une des applications d'une telle possibilité est l'obtention d'informations diverses, au sein de son véhicule, notamment lorsque le dispositif de réception est connecté à un appareil électronique de type ordinateur portable. Parmi ces informations, on peut notamment citer les messages de type courrier électronique, les messages dits touristiques informant sur certaines spécificités des environs d'un endroit où se trouve le véhicule (stations services, hôtels les plus proches, informations locales sur le trafic routier, la météo...).

Comme on le voit, les différents types d'informations pour l'aide à la conduite sont nombreux. Cependant, un problème se pose : du fait de leur différence de nature, due essentiellement au caractère distinct de leur provenance, les différents types d'informations d'aide à la conduite sont restitués sur des supports, essentiellement des écrans, qui sont distincts. Ainsi, si un utilisateur souhaite disposer d'un système de vision de nuit, d'un système GPS, et d'informations de type touristique, il devra disposer de trois écrans distincts pour accéder à l'ensemble des informations souhaitées.

Ceci pose un ensemble de problèmes : tout d'abord un problème d'encombrement, les écrans devant être d'une taille suffisante pour que les informations qu'ils restituent soient rapidement intelligibles. Ensuite, et surtout, un problème de sécurité, les différents écrans ne pouvant pas être simultanément disposés à des emplacements optimaux pour que le conducteur effectue un mouvement de tête minimal afin de les consulter. Inévitablement, lorsque l'on multiplie les écrans de contrôle, certains doivent être disposés en position basse, c'est à dire sous le niveau moyen du tableau de bord, ce qui oblige le conducteur à quitter des yeux la route pendant une durée trop importante.

C'est un objet de l'invention de répondre à l'ensemble des problèmes qui viennent d'être mentionnés. Dans l'invention, on propose de superposer sur un même écran, disposé judicieusement pour être facilement visible par un conducteur, des informations d'aide à la conduite qui sont de nature différente : on propose ainsi d'afficher simultanément des informations dites vidéo, c'est à dire relatives à une scène captée par une caméra, qui restituent instantanément une image vidéo relative à un environnement direct du véhicule, et des informations dites graphiques, c'est à dire composées de représentations symboliques et/ou alphanumériques, et qui ne sont pas obtenues au moyen d'une caméra. Notamment, dans l'invention, on superpose sur un même écran de contrôle une image vidéo de la route empruntée par le véhicule et des informations graphiques de direction fournies par un système de navigation.

L'invention concerne donc essentiellement un système d'aide à la conduite embarqué dans un véhicule automobile, ledit système comprenant une caméra du type vision de nuit pour restituer, sur un écran vidéo une image vidéo d'un environnement dans lequel évolue le véhicule automobile, ledit environnement comprenant la route sur laquelle circule le véhicule, des moyens pour obtenir des informations graphiques destinées au conducteur du véhicule, et des moyens pour superposer sur l'image vidéo restituée lesdites informations graphiques.

Selon l'invention, lesdits moyens d'obtention d'informations graphiques comprennent des moyens pour produire un ensemble d'informations graphiques de différents types incluant au moins des informations d'aide à la circulation élaborées au moyen d'un système de navigation utilisé avec un système GPS (122), des informations de signalisation des règles du code de la route et des informations échangées sur un réseau de communication, et le système comprend également des moyens actionnables par le conducteur pour sélectionner parmi lesdits types d'informations graphiques produits au moins un type d'informations graphiques à superposer sur l'image vidéo.

Conformément à l'invention, la caméra est une caméra de type vision de nuit. Avantageusement, une caméra fonctionnant dans l'infra-rouge et que l'on peut disposer soit dans le dispositif d'éclairage /signalisation du type projecteur soit sur le véhicule hors du projecteur. C'est en effet dans ce cas de figure, en conduite de nuit, que l'invention est particulièrement avantageuse : c'est la nuit que la vision de la route par le conducteur est la plus difficile, et que l'image restituée par une caméra , de type indra-rouge, est la plus délicate à interpréter par le conducteur : puisque l' image restituée par une caméra infra-rouge est généralement en noir et blanc et pas toujours avec une grande netteté. Pouvoir superposer à ce type d'image relativement « pauvre » des informations graphiques est donc très utile, afin que l'interprétation de l'image par le conducteur soit simplifiée, et qu'il puisse rapidement réagir si nécessaire.

Le système selon l'invention peut en outre présenter une ou plusieurs des caractéristiques secondaires suivantes :
- l'ensemble d'informations graphiques comporte également des informations graphiques relatives à une direction de virage de la route.
- les informations graphiques relatives à une direction de virage de la route sont matérialisées par des éléments graphiques de type flèche de direction, lesdites flèches de direction étant superposées sur l'image vidéo au niveau de la route pour réaliser un marquage au sol virtuel.
- les informations d'aide à la circulation élaborées au moyen du système de navigation sont des indications de direction.
- les indications de direction sont matérialisées par des éléments graphiques de type flèche de direction, lesdites flèches de direction étant superposées sur l'image vidéo au niveau de la route pour réaliser un marquage au sol virtuel.
- l'écran vidéo est disposé sur une partie supérieure du tableau de bord du véhicule automobile ou au-dessus du tableau de bord.
- le système comporte des moyens de réception et d'émission pour échanger des informations sur un réseau de communication, par exemple un réseau de radiotéléphonie cellulaire.
- l'ensemble d'informations graphiques comporte au moins des informations de type informations de messagerie, par exemple des courriers électroniques.
- le système comporte des moyens pour que le conducteur détermine au moins un type d'informations graphiques à superposer à l'image vidéo.

Avantageusement, le système d'aide à la conduite selon l'invention superpose à l'image obtenue par la caméra des informations du type :
- des indications des bords de la route où se trouve le véhicule équipé d'un tel système
- des indications de présence de piétons ou animaux sur ladite route
- des indications sur la distance séparant ledit véhicule du véhicule devant lui.
   Les indications de bords de route mentionnées plus haut peuvent avantageusement être obtenues par augmentation du contraste de la bordure de la route. Un procédé permettant de détecter le bord de la route, pour en augmenter le contraste afin que le conducteur puisse mieux « suivre » la route dans les virages la nuit est notamment décrit dans le brevet FR-2848935 déposé le 20 décembre 2002 et correspondant à la demande de brevet européen EP-1431918 déposé le 8 décembre 2003 ; documents auxquels on se rapportera pour plus de détails :une fois ces bords « soulignés » selon par exemple ce procédé, ils sont superposés à l'image infra-rouge, ce qui en facilite grandement l'interprétation pour le conducteur. Les indications sur la présence d'êtres vivants sur la route est également extrêmement utile pour des raisons évidentes : on peut utiliser un procédé de détection des êtres vivants par exemple par une caméra thermique ou tout autre moyen, la zone repérée étant alors incrustée /soulignée dans l'image infra-rouge. Enfin, concernant l'indication sur la distance séparant le véhicule du véhicule qui le précède sur la route, on peut utiliser tout procédé approprié, utilisant notamment un ou plusieurs capteurs à l'avant du véhicule : l'information sur la distance peut être calculée en continu ou selon une fréquence choisie, puis incrustée dans l'image infra-rouge. Elle peut aussi s'afficher uniquement quand elle se trouve en dessous d'un seuil de sécurité pré-déterminé, en tant qu'avertissement au conducteur.. Cette remarque est également vraie pour toutes les informations graphiques évoquées ausujet de invention : il peut s'agir d'un affichage permanent, ou selon une fréquence donnée, ou qui ne s'affiche que lorsqu'il y a dépassement d'un seuil critiqué pré-déterminé, l'affichage peut aussi clignoter etc ....

Un autre objet de l'invention est un véhicule automobile équipé d'un système d'aide à la conduite présentant l'une au moins des caractéristiques essentielles et/ou secondaires qui viennent d'être précisées.

L'invention et ses différentes applications seront mieux comprises à la lecture de la description qui suit et à l'examen des figures qui l'accompagnent. Celles-ci ne sont présentées qu'à titre indicatif et nullement limitatif de l'invention.
- à la figure 1, une représentation schématique du traitement des différentes informations à afficher dans le système selon l'invention ;
- à la figure 2, une représentation photographique d'un premier exemple d'image visible sur un écran de contrôle grâce au système selon l'invention ;
- à la figure 3, une représentation schématique d'un deuxième exemple d'image visible sur un écran de contrôle grâce au système selon l'invention.

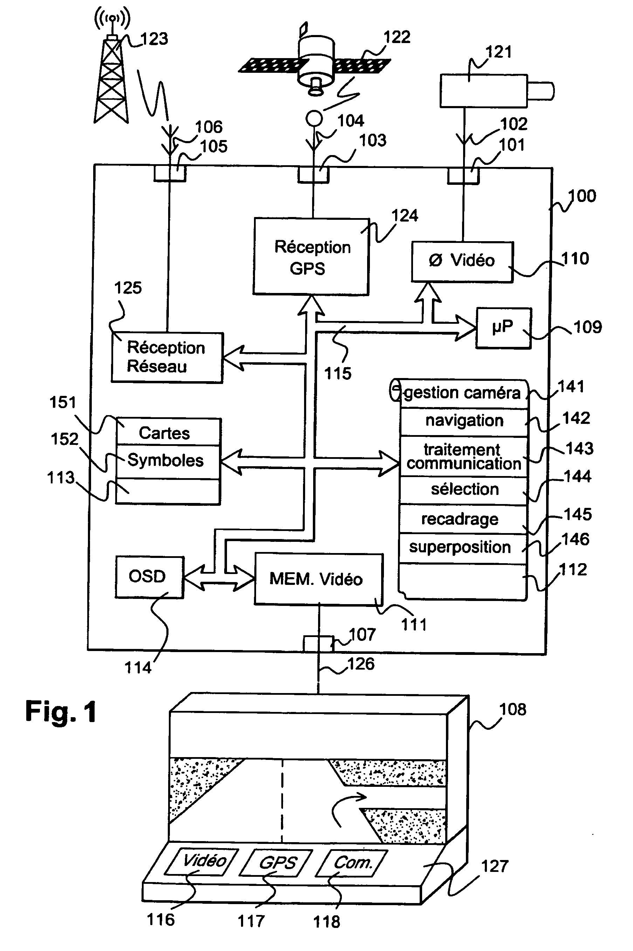

Le fonctionnement du système selon l'invention est schématiquement illustré au moyen de la figure 1. Sur cette figure, un module 100 de traitement de signaux, par exemple de type DSP (Digital Signal Processor en anglais, pour processeur de signal numérique) reçoit :
- à une première entrée 101 un premier ensemble d'informations sous la forme d'un flux vidéo 102 obtenu au moyen d'une caméra 121 ;
- à une deuxième entrée 103, symbolisée par une première antenne, un deuxième ensemble d'informations sous la forme de coordonnées GPS 104, reçu depuis un satellite 122 ;
- à une troisième entrée 105, symbolisée par une deuxième antenne, un troisième ensemble d'informations sous la forme de signaux de communication 106 transmis par un réseau de communication distant 123, par exemple un réseau de radiotéléphonie cellulaire fonctionnant selon les normes ou protocoles GSM, GPRS, UMTS ou tout autre norme ou protocole utilisé dans de tels réseaux de télécommunication.

Le module 100 présente une sortie 107 reliée au moyen d'une liaison vidéo 126 à un écran de contrôle 108 disposé, de façon visible pour le conducteur, dans le véhicule. A l'intérieur du module 100, on trouve notamment un microprocesseur 109, un premier module de réception 110 pour recevoir le flux vidéo 102, un deuxième module de réception 124 pour recevoir les coordonnées GPS 104, un troisième module de réception 125 pour recevoir les signaux de communication 106, une mémoire vidéo 111, une mémoire de programmes 112, une mémoire de données 113, un module de type OSD 114 (pour On Screen Display en anglais), et un bus bidirectionnel de communication 115 permettant aux différents éléments qui viennent d'être cités d'échanger des informations entre eux, ces informations pouvant être des données, des instructions ou des adresses mémoire. La mémoire de programmes 112 comporte un ensemble d'applications qui contribuent notamment au fonctionnement du système selon l'invention. Chacune de ces applications pourrait être remplacée par un circuit électronique spécifique au sein du DSP 100. Leur fonctionnement est géré par le microprocesseur 109.

Dans le système selon l'invention, on peut prévoir avantageusement un ensemble de touches de contrôle qui permettent de sélectionner quels types d'informations doivent être restituées sur l'écran de contrôle 108. Ces touches sont par exemple disposées sur un clavier 127 situé à proximité de l'écran de contrôle 108. On a ainsi, dans l'exemple décrit :
- une première touche, dite touche vidéo 116, qui permet de sélectionner le flux vidéo filmé par la caméra 121, et qui permet d'obtenir sur l'écran de contrôle une image de l'environnement du véhicule, de préférence comprenant la route empruntée par le véhicule. La caméra 121 peut être de type vision de nuit et/ou vision de jour. Dans le cas d'une vision de nuit, l'image vidéo restituée est une image de la route telle que la percevrait le conducteur s'il roulait de jour. Une application 141, dite application de gestion de la caméra, de la mémoire de programmes 112 permet d'effectuer les traitements d'image habituels pour l'obtention de l'image vidéo de la route sur l'écran de contrôle 108.
- une deuxième touche 117, dite touche GPS, qui permet de sélectionner des premières informations graphiques pour les afficher sur l'écran de contrôle 108. Ces informations graphiques sont élaborées à partir des coordonnées GPS 104 et d'une application 142, dite application de navigation, de la mémoire de programmes 112 ; l'application de navigation 142 est une application de navigation habituellement utilisée dans certains véhicules.
L'application de navigation 142 utilise notamment une base de données de cartographie 151, contenue dans la mémoire de données 113, qui permet de sélectionner une carte, éventuellement selon différentes échelles, correspondant à une zone coïncidant avec les coordonnées GPS reçues. L'application 142 peut également utiliser une base de données de symboles 152, contenue dans la mémoire de donnée 113, qui comporte un ensemble d'informations graphiques de type flèches de direction, panneaux de signalisation ou tout autre symbole opportun pour informer le conducteur des spécificités d'une route qu'il emprunte et des directions qu'il a à suivre.

Dans d'autres exemples de réalisation du système selon l'invention, les différentes bases de données 141 et 142 ne sont pas contenues dans la mémoire de données 113 mais sont communiquées au module 100 par une quatrième entrée non représentée qui permet de connecter un lecteur de supports d'informations, par exemple des CéDéroms, sur lesquels sont contenues les différentes bases de données.
- une troisième touche 118, dite touche de communication, qui permet de sélectionner des deuxièmes informations graphiques pour les afficher sur l'écran de contrôle 108. Ces informations graphiques sont élaborées à partir des informations de communication 106 reçues au niveau du troisième module de communication 125 ; elles peuvent être par exemple des messages alphanumériques tels que des courriers électroniques dont le conducteur aurait sollicité la réception, ou tels que des indications de type touristique ou pratique, comme la liste des hôtels d'une région dans laquelle se situe le véhicule automobile, ou l'adresse de la station service la plus proche du véhicule.

Pour obtenir de telles informations, on prévoit dans le système selon l'invention, que le conducteur puisse se connecter à des serveurs Internet, par exempte selon le système GPRS ou la norme UMTS. Des touches supplémentaires permettant la navigation sur Internet, ainsi que des touches alphanumériques, non représentés, sont prévus également sur le clavier 127 ou à proximité de l'écran de contrôle 108. Une application 143, dite application de traitement des informations de communication, est dédiée à la gestion de l'ensemble de ces opérations. Pour de telles utilisations, le troisième module de réception 125 doit évidemment comporter une unité d'émission pour émettre des requêtes sur le réseau de communication, et éventuellement un logiciel du type navigateur Internet permettant notamment de se connecter au réseau Internet via le réseau de communication.

Bien évidemment, la présence des trois touches distinctes n'est pas indispensable dans le système selon l'invention : les opérations de sélection des différentes informations à afficher peuvent également s'effectuer au moyen d'un menu affichable sur l'écran de contrôle 108. La présence de ces trois touches apporte cependant un confort d'utilisation du système selon l'invention, le conducteur ayant ainsi un accès direct, qui ne nécessite pas d'effort de concentration particulier et qui ne le distrait donc pas, aux différents types d'informations disponibles.

La mémoire de programmes 112 comporte par ailleurs une application 144, dite application de sélection des informations, qui permet, en fonction des choix du conducteur, d'envoyer vers la mémoire vidéo 111 uniquement les types d'informations souhaitées par le conducteur. Les informations vidéo issues de la caméra 121 sont directement transmises, lorsqu'elles sont sélectionnées par le conducteur, à la mémoire vidéo 111. Les informations graphiques, pour leur part, sont transmises au module OSD 114 pour être mises en forme.

Selon l'invention, un conducteur a la possibilité de sélectionner plusieurs informations de types différents pour les restituer sur l'écran de contrôle 108. Ainsi, dans le cas où le conducteur sélectionne les informations vidéo fournies par la caméra 121 et les informations graphiques élaborées à partir des cordonnées GPS, une application 145, dite application de recadrage, de la mémoire de programmes 112 intervient. Cette application comporte notamment des algorithmes de traitement d'images pour détecter, par exemple, les bordures de la route sur les informations vidéo fournies par la caméra 121 ; l'application de recadrage peut faire appel à ia base de données de cartographie 151 pour comparer l'image vidéo et la carte graphique correspondante, de façon à extraire clairement les contours de la route.

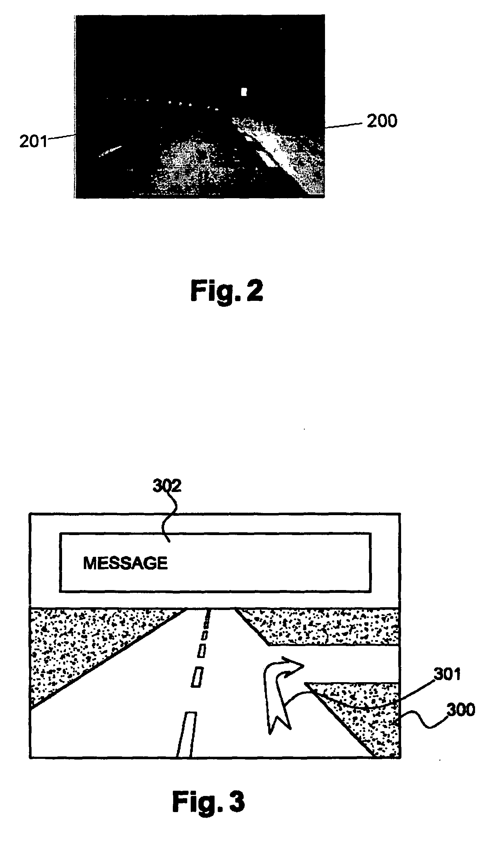

Une fois ces contours extraits, une application 146, dite application de superposition, de la mémoire de programmes 112 permet de superposer des symboles graphiques, présents dans la base de données 152, et l'image vidéo pour afficher différentes informations de nature graphique sur l'image vidéo. On obtient ainsi sur l'écran de contrôle 108 une image de type de celle montrée à la figure 2, où une image vidéo 200 de la route comporte un marquage au sol virtuel constitué d'une flèche 201 de direction qui indique que la route à suivre tourne sur la gauche.

L'application de superposition 146 permet d'une façon générale de superposer des informations de différentes natures, c'est à dire élaborées à partir d'informations reçues par deux des trois, ou les trois, modules de réception 110, 124 et 125. Par exemple, la figure 3 montre une superposition d'une image vidéo 300 représentée de façon schématique, d'informations graphiques de type symboliques 301, disposées de façon virtuelle sur la partie de l'image vidéo représentant la route, et d'informations alphanumériques 302, disposées dans un cadre de l'écran de contrôle 108, et transmises au véhicule par le système de communication 123.

D'autres types d'informations graphiques qui sont disponibles au sein du véhicule, du type heure, date, paramètres du véhicule tels que la vitesse, peuvent également être superposés à un premier type d'informations reçu dans le module 100 au moyen d'un des modules de réception 110, 124 ou 125.

Dans le cas où l'on a recours à une caméra infra rouge dite vision de nuit, on peut ainsi envisager une utilisation diurne de l'invention où le conducteur (ou le passager à l'avant) peut lire des informations alphanumériques diverses, par exemple des mails électroniques, et une utilisation nocturne où le conducteur peut lire les informations issues du GPS pour accroître la sécurité de sa conduite.

## Revendications

1. Système d'aide à la conduite embarqué dans un véhicule automobile, ledit système comprenant une caméra (121)du type vision de nuit pour restituer, sur un écran vidéo (108), une image vidéo (200) d'un environnement dans lequel évolue le véhicule automobile, ledit environnement comprenant la route sur laquelle circule le véhicule, des moyens (100) pour obtenir des informations graphiques (201 ; 301 ; 302) destinées au conducteur du véhicule, et des moyens pour superposer sur l'image vidéo (200) restituée lesdites informations graphiques (201 ;301 ; 302), **caractérisé en ce que**
lesdits moyens d'obtention d'informations graphiques (100) comprennent des moyens pour produire un ensemble d'informations graphiques de différents types incluant au moins des informations d'aide à la circulation élaborées au moyen d'un système de navigation (142) utilisé avec un système GPS (122), des informations de signalisation des règles du code de la route et des informations échangées sur un réseau de communication (123), et
**en ce qu'**il comprend également des moyens (144 ; 116 ; 117 ; 118) actionnables par le conducteur pour sélectionner parmi lesdits types d'informations graphiques produits au moins un type d'informations graphiques à superposer sur l'image vidéo (200).

2. Système d'aide à la conduite selon la revendication 1, **caractérisé en ce que** lesdits moyens de production de différents types d'informations graphiques comprennent des moyens de traitement d'images pour extraire des bords de la route à partir de ladite image vidéo (200) et produire également , à partir desdits bords extraits, des informations graphiques (201) relatives à une direction de virage de la route.

3. Système d'aide à la conduite selon la revendication 2, **caractérisé en ce que** lesdites informations graphiques (201) relatives à une direction de virage de la route sont matérialisées par des éléments graphiques de type flèche de direction (201), ladite flèche de direction étant superposée sur l'image vidéo (200) au niveau de la route pour réaliser un marquage au sol virtuel.

4. Système d'aide à la conduite selon l'une quelconque des revendications précédentes **caractérisé en ce que** les informations d'aide à la circulation élaborées au moyen du système de navigation sont des indications de direction (201 ;301).

5. Système d'aide à la conduite selon la revendication précédente **caractérisé en ce que** les indications de direction sont matérialisées par des éléments graphiques de type flèche de direction (201 ;301), lesdites flèches de direction étant superposées sur l'image vidéo (200) au niveau de la route pour réaliser un marquage au sol virtuel.

6. Système d'aide à la conduite selon l'une au moins des revendications précédentes **caractérisé en ce que** l'écran vidéo (108) est disposé sur une partie supérieure du tableau de bord du véhicule automobile ou au-dessus du tableau de bord.

7. Système d'aide à la conduite selon l'une au moins des revendications précédentes **caractérisé en ce qu'**il comporte des moyens de réception et d'émission (143) pour échanger lesdites informations de réseau de communication (123).

8. Système d'aide à la conduite selon la revendication précédente **caractérisé en ce que** le réseau de communication (123) est un réseau de radiotéléphonie cellulaire.

9. Système d'aide à la conduite selon l'une au moins des revendications 7 ou 8 **caractérisé en ce que** lesdites informations de réseau de communication comporte au moins des informations de messagerie (302).

10. Système d'aide à la conduite selon l'une au moins des revendications précédentes **caractérisé en ce que** ledit ensemble d'informations graphiques comprend également des indications de présence de piétons ou animaux sur ladite route et/ou des indications sur la distance séparant ledit véhicule du véhicule devant lui.

11. Véhicule automobile équipé d'un système d'aide à la conduite selon l'une au moins des revendications précédentes.

## Claims

1. Driving assistance system on board a motor vehicle, the said system comprising a camera (121) of the night-time vision type, in order to provide on a video screen (108) a video image (200) of an environment in which the motor vehicle is moving, the said environment comprising the road on which the vehicle is travelling, means (100) for obtaining graphic information (201; 301; 302) destined for the driver of the vehicle, and means for superimposing the said graphic information (201; 301; 302) on the video image (200) provided, **characterised in that** the said means for obtaining graphic information (100) comprise means for production of a set of graphic information of various types, including at least traffic assistance information, produced by means of a navigation system (142) used together with a GPS system (122), information for indicating highway code rules, and information exchanged on a communications network (123), and **in that** it also comprises means (144; 116; 117; 118) which can be actuated by the driver in order to select from amongst the said types of graphic information produced at least one type of graphic information to be superimposed on the video image (200).

2. Driving assistance system according to claim 1, **characterised in that** the said means for production of different types of graphic information comprise image processing means in order to extract roadsides from the said video image (200) and also to produce from the said roadsides extracted graphic information (201) relating to a direction of turning of the road.

3. Driving assistance system according to claim 2, **characterised in that** the said graphic information (201) relating to a direction of turning of the road takes the form of graphic elements of a directional arrow type (201), the said directional arrow being superimposed on the video image (200) at the level of the road in order to create marking at virtual ground level.

4. Driving assistance system according to any one of the preceding claims, **characterised in that** the traffic assistance information produced by means of the navigation system consists of direction indications (201; 301).

5. Driving assistance system according to the preceding claim, **characterised in that** the direction indications take the form of graphic elements of the directional arrow type (201; 301), the said directional arrows being superimposed on the video image (200) at the level of the road in order to create marking at virtual ground level.

6. Driving assistance system according to at least one of the preceding claims, **characterised in that** the video screen (108) is disposed on an upper part of the motor vehicle dashboard or above the dashboard.

7. Driving assistance system according to at least one of the preceding claims, **characterised in that** it comprises receipt and emission means (143) in order to exchange the said communication network information (123).

8. Driving assistance system according to the preceding claim, **characterised in that** the communication network (123) is a cellular radiotelephony network.

9. Driving assistance system according to at least one of claims 7 or 8, **characterised in that** the said communication network information comprises at least messaging information (302).

10. Driving assistance system according to at least one of the preceding claims, **characterised in that** the said graphic information assembly also comprises indications of the presence of pedestrians or animals on the said road, and/or indications of the distance which separates the said vehicle from the vehicle in front of it.

11. Motor vehicle equipped with a driving assistance system according to at least one of the preceding claims.

## Patentansprüche

1. Fahrerassistenzsystem in einem Kraftfahrzeug, wobei das System umfasst: eine Kamera (121) vom Typ Nachtsichtkamera zur Wiedergabe eines Videobildes (200) auf einem Monitor (108) von einem Umfeld, in dem sich das Kraftfahrzeug bewegt, wobei das Umfeld die vom Fahrzeug befahrene Straße umfasst, Mittel (100) zum Erhalt grafischer Informationen (201; 301; 302), die für den Fahrer des Fahrzeugs bestimmt sind, und Mittel zum Einblenden der grafischen Informationen (201; 301; 302) in das wiedergegebene Videobild (200),
**dadurch gekennzeichnet, dass** die Mittel zum Erhalt der grafischen Informationen (100) Mittel zum Erzeugen einer Gruppe grafischer Informationen unterschiedlicher Art umfassen, die zumindest fahrtunterstützende Informationen, die mittels eines zusammen mit einem GPS-System (122) betriebenen Navigationssystems (142) erstellt werden, Informationen zur Anzeige von Verkehrsregeln und über ein Kommunikationsnetz (123) ausgetauschte Informationen enthält, und
dass es ferner durch den Fahrer bedienbare Mittel (144; 116; 117; 118) umfasst, um aus den erzeugten Arten grafischer Informationen wenigstens eine Art grafischer Information zum Einblenden in das Videobild (200) auszuwählen.

2. Fahrerassistenzsystem nach Anspruch 1,
**dadurch gekennzeichnet, dass** die Mittel zum Erzeugen der verschiedenen Arten grafischer Information Mittel zur Bildverarbeitung umfassen, um anhand des Videobildes (200) Straßenränder zu extrahieren und um ferner anhand der extrahierten Ränder grafische Informationen (201) über einen Kurvenverlauf der Straße zu erzeugen.

3. Fahrerassistenzsystem nach Anspruch 2,
**dadurch gekennzeichnet, dass** die grafischen Informationen (201) über einen Kurvenverlauf der Straße durch grafische Elemente vom Typ Richtungspfeil (201) dargestellt werden, wobei der Richtungspfeil in das Videobild (200) in Höhe der Straße eingeblendet wird, um eine virtuelle Bodenmerkierung zu erzeugen.

4. Fahrerassistenzsystem nach einem der vorhergehenden Ansprüche,
**dadurch gekennzeichnet, dass** die mit Hilfe des Navigationssystems erstellten fahrtunterstützenden Informationen Richtungsangaben (201; 301) sind.

5. Fahrerassistenzsystem nach dem vorhergehenden Anspruch,
**dadurch gekennzeichnet, dass** die Richtungsangaben durch grafische Elemente vom Typ Richtungspfeil (201; 301) dargestellt werden, wobei die Richtungspfeile in das Videobild (200) in Höhe der Straße eingeblendet werden, um eine virtuelle Bodenmarkierung zu erzeugen.

6. Fahrerassistenzsystem nach wenigstens einem der vorhergehenden Ansprüche,
**dadurch gekennzeichnet, dass** der Monitor (108) an einem oberen Teil des Armaturenbretts des Kraftfahrzeugs oder über dem Armaturenbrett angeordnet Ist.

7. Fahrerassistenzsystem nach wenigstens einem der vorhergehenden Ansprüche,
**dadurch gekennzeichnet, dass** es Empfangs- und Sendemittel (143) zum Austausch der Informationen des Kommunikationsnetzes (123) umfasst.

8. Fahrerassistenzsystem nach dem vorhergehenden Anspruch,
**dadurch gekennzeichnet, dass** das Kommunikationsnetz (123) ein Mobllfunknetz ist.

9. Fahrerassistenzsystem nach wenigstens einem der Ansprüche 7 oder 8,
**dadurch gekennzeichnet, dass** die Informationen des Kommunikationsnetzes wenigstens Mitteilungsdienstinformationen (302) umfassen.

10. Fahrerassistenzsystem nach wenigstens einem der vorhergehenden Ansprüche,
**dadurch gekennzeichnet, dass** die Gruppe grafischer Informationen ferner Angaben zur Anwesenheit von Fußgängern oder Tieren auf der Straße und/oder Angaben zum Abstand zu dem vorausfahrenden Fahrzeug umfasst.

11. Kraftfahrzeug, ausgestattet mit einem Fahrerassistenzsystem nach wenigstens einem der vorhergehenden Ansprüche.
